# EUROPÄISCHE PATENTSCHRIFT

(11) **EP 3 146 619 B1**
(45) Veröffentlichungstag und Bekanntmachung des Hinweises auf die Patenterteilung: **29.04.2020**
(21) Anmeldenummer: 15709969.8
(22) Anmeldetag: 17.03.2015
(51) Int. Cl.: H02K 3/28

(54) **ELEKTRISCHE MASCHINE**
ELECTRIC MACHINE
MACHINE ÉLECTRIQUE

(30) Priorität: 26.03.2014 DE 102014104225
(43) Veröffentlichungstag der Anmeldung: 29.03.2017
(73) Patentinhaber: FEAAM GmbH, 85577 Neubiberg (DE)
(72) Erfinder: GURAKUQ, Dajaku, 85579 Neubiberg (DE)
(74) Vertreter: Epping - Hermann - Fischer
(86) Internationale Anmeldenummer: PCT/EP2015/055541
(87) Internationale Veröffentlichungsnummer: WO 2015/144494

(56) Entgegenhaltungen:
- EP-A1- 1 732 011
- EP-A1- 1 860 757
- DE-A1- 10 112 543
- DE-T5-112005 003 603

## Beschreibung

Die vorliegende Erfindung betrifft eine elektrische Maschine mit einem Stator und einem relativ zum Stator beweglichen Rotor. Das Dokument EP1732011 offenbart eine Maschine gemäß dem Oberbegriff des Anspruchs 1.

Bei elektrischen Maschinen ist es normalerweise wünschenswert, einen hohen Wirkungsgrad und geräuscharmen Lauf der Maschine zu erzielen. Hierzu ist es erforderlich, höhere Harmonische der magnetomotorischen Kraft möglichst zu unterdrücken und nur diejenige Harmonische zu nutzen, die die Arbeitswelle der Maschine darstellt.

Dies ist beispielsweise mit verteilten Wicklungen möglich. Verteilte Wicklungen sind jedoch mit einem hohen fertigungstechnischen Aufwand verbunden und führen damit zu höheren Herstellungskosten.

Es besteht daher Bedarf nach einer konzentrierten Wicklung, die wenig Oberwellenanteil, das heißt wenig höhere Harmonische der magnetomotorischen Kraft aufweist, und dabei mit geringem Aufwand herstellbar ist.

Aufgabe der Erfindung ist es, eine elektrische Maschine mit konzentrierter Wicklung anzugeben, die neben der Grundwelle wenig unerwünschte Harmonische aufweist.

Die Aufgabe wird durch den Gegenstand des Patentanspruchs 1 gelöst.

Ausgestaltungen und vorteilhafte Weiterbildungen sind in den abhängigen Patentansprüchen angegeben.

Eine elektrische Maschine nach dem vorgeschlagenen Prinzip umfasst einen Stator und einen relativ zum Stator beweglichen Rotor. Der Stator umfasst mindestens zwei Wicklungssysteme, die als erste und zumindest eine zweite Wicklung bezeichnet sind. Diese sind jeweils als mehrsträngige zahnkonzentrierte Wicklung ausgeführt.

Die beiden Wicklungen sind in jeweilige, für die Wicklungen vorgesehene Nuten des Stators eingebracht. Die erste Wicklung umfasst sechs Spulen, die in sechs Nuten eingebracht und unterschiedlichen elektrischen Strängen zugeordnet sind. Die zweite Wicklung umfasst zwölf Spulen, die in zwölf Nuten des Stators eingebracht und ebenfalls verschiedenen elektrischen Strängen zugeordnet sind. Die Windungszahlen der Spulen der ersten Wicklung unterscheiden sich von den Windungszahlen der Spulen der zweiten Wicklung.

Die Spulen der ersten und zweiten Wicklung sind bevorzugt um jeweils genau einen Zahn des Stators gewickelt, wobei ein Zahn jeweils zwischen zwei benachbarten Nuten des Stators gebildet ist.

Die erste und zweite Wicklung können eine unterschiedliche Wicklungstopologie aufweisen.

Berechnungen haben ergeben, dass die Kombination der vorgeschlagenen zwei Wicklungen, die jeweils als konzentrierte Wicklung und mehrsträngig ausgeführt sind, dazu führt, dass die höheren Harmonischen Anteile der magnetomotorischen Kraft oberhalb der hier als Arbeitswelle genutzten Grundwelle nahezu vollständig ausgelöscht werden.

Bevorzugt ist die zweite Wicklung näher am Luftspalt der elektrischen Maschine angeordnet, der zwischen Stator und Rotor gebildet ist, als die erste Wicklung.

Dabei sind die Spulen der zweiten Wicklung mit geringerem Gesamtquerschnitt als die Spulen der ersten Wicklung ausgeführt. Bevorzugt ist bei den Spulen der zweiten Wicklung eine geringere Windungszahl als bei den Spulen der ersten Wicklung vorgesehen.

In einer Ausführungsform sind die Nuten der ersten Wicklung gleichmäßig entlang des Umfangs verteilt, das bedeutet, dass die Nuten im Abstand von 360°/6p angeordnet sind. Dabei ist p die Polpaarzahl. Ebenso sind bevorzugt auch die Nuten der zweiten Wicklung symmetrisch entlang des Umfangs verteilt, sodass diese jeweils in einem Winkel von 360°/12p voneinander beabstandet sind.

Das Verhältnis der Windungszahlen der Spulen der ersten Wicklung zur Windungszahl der Spulen der zweiten Wicklung liegt bevorzugt in einem Intervall zwischen 1,5 und 5, wobei die Intervallgrenzen eingeschlossen sind.

Weiter bevorzugt ist n eine natürliche Zahl und die Windungszahl der Spulen der ersten Wicklung beträgt 9 x n, während die Windungszahl der Spulen der zweiten Wicklung 4 x n beträgt. Damit ist das Verhältnis der Windungszahlen von erster zu zweiter Wicklung 9:4.

In diesem Fall ergibt sich ein Wicklungsfaktor von zirka 35,3%.

Für andere Verhältnisse von Windungszahlen beträgt der Wicklungsfaktor zwischen 30 und 40 % abhängig vom Verhältnis der Windungszahl der ersten und zweiten Wicklung.

Die erste und zweite Wicklung ist bevorzugt jeweils mit drei Strängen ausgeführt. Dadurch lassen sich die erste und die zweite Wicklung problemlos an ein elektrisches Dreiphasensystem anschließen.

Wenn die Maschine beispielsweise als Asynchronmaschine ausgeführt ist, so bietet es sich an, zwischen die Wicklungen der Maschine und das elektrische Dreiphasensystem einen elektrischen Umrichter vorzusehen. An diesen können die beiden Wicklungen bevorzugt in einer Stern-Dreieck-Verschaltung angeschlossen sein. Dabei bilden die drei elektrischen Stränge der zweiten Wicklung das innenliegende Dreieck der Schaltung, während die Knoten des Dreiecks über die Spulen der jeweiligen drei Stränge der ersten Wicklung an die drei Phasen des Umrichters beziehungsweise des elektrischen Netzes angeschlossen werden.

Im Falle der Stern-Dreieck-Verschaltung ist bevorzugt das erste Wicklungssystem relativ zum zweiten Wicklungssystem um einen Winkel von 0° zueinander verschoben.

In einer Ausführungsform mit drei Strängen A, B, C bedeutet das, dass beispielsweise zwei Spulen des Strangs A in Radialrichtung dem Rotor zugewandt bezogen auf die Spule des ersten Strangs A der ersten Wicklung angeordnet sind. Entsprechendes gilt für die anderen Stränge B und C, sodass jeweils die Spulen des gleichen Strangs von verschiedenen Wicklungen in Radialrichtung übereinander angeordnet sind.

Alternativ kann anstelle der Stern-Dreieck-Schaltung auch eine Stern-Stern-Schaltung oder eine Dreieck-Dreieck-Schaltung Anwendung finden. In diesem Fall sind bevorzugt die erste und die zweite Wicklung zueinander in einem Winkel von 90° mechanisch verschoben.

Die elektrische Maschine kann eine Linearmaschine, Axialflussmaschine, Radialflussmaschine, Asynchronmaschine und/oder Synchronmaschine sein.

Die Maschine kann als Maschine mit Innenläufer oder mit Außenläufer aufgebaut sein. Der Rotor kann von einem der folgenden Typen sein: Käfigläufer, Mehrschichtrotor im Falle der Asynchronmaschine oder im Falle der Synchronmaschine Permanentmagnetrotor, Rotor mit vergrabenen Magneten oder elektrisch gespeister Rotor, insbesondere Vollpolrotor, Schenkelpolrotor, Heteropolar-Rotor, Homopolar-Rotor oder Synchron-Reluktanzrotor.

Die vorgeschlagene zweipolige konzentrierte Wicklung weist das gleiche Spektrum der magnetomotorischen Kraft auf, wie eine verteilte Wicklung mit q = 2, wobei q die Anzahl der Spulen pro Phase pro Pol ist.

In der oben gennannten Ausführungsform, bei der keine Stern-Dreieck-Schaltung zum Einsatz kommen soll, sondern eine reine Stern- beziehungsweise reine Dreieck-Schaltung der elektrischen Stränge, wird eine gute Charakteristik der magnetomotorischen Kraft auch für andere Verhältnisse von Windungszahl der Spulen der ersten Wicklung bezogen auf die Windungszahl der Spulen der zweiten Wicklung von beispielsweise 3:8 erzielt. Der Wicklungsfaktor variiert dabei zwischen 27 und 38 %.

Bevorzugt beträgt das Verhältnis der Windungszahl der Spulen der ersten Wicklung zur Windungszahl der Spulen der zweiten Wicklung bei dieser Ausführungsform 4:1, was zu einem Wicklungsfaktor von zirka 31,1 % führt. Damit ist der Wicklungsfaktor geringer als für die Stern-Dreieck-Schaltung.

Weitere Ausgestaltungen und vorteilhafte Wirkungsweisen des vorgeschlagenen Prinzips werden nachfolgend anhand von mehreren Ausführungsbeispielen an verschiedenen Zeichnungen näher erläutert.

Dabei zeigen:
- Figur 1: ein erstes Ausführungsbeispiel einer elektrischen Asynchron-Maschine nach dem vorgeschlagenen Prinzip,
- Figur 2: die Verteilung der magnetomotorischen Kraft über eine Umdrehung am Beispiel von Figur 1,
- Figur 3: die Harmonischen der magnetomotorischen Kraft am Beispiel der Figur 1,
- Figur 4: die beispielhafte Stern-Dreieck-Verschaltung der Wicklungen gemäß Beispiel der Figur 1,
- Figur 5: die Ausführung als Permanentmagnet-Synchronmaschine an einem Beispiel,
- Figur 6: ein anderes Ausführungsbeispiel einer Asynchron-Maschine des vorgeschlagenen Prinzips für Stern- oder Dreieck-Schaltung,
- Figur 7: die Verteilung der magnetomotorischen Kraft über eine Umdrehung am Beispiel der Figur 6,
- Figur 8: die Harmonischen der magnetomotorischen Kraft am Beispiel der Figur 6,
- Figur 9: die relative Anordnung der Wicklungssysteme im Stator an einem Beispiel,
- Figur 10: die Anwendung des Beispiels von Figur 6 auf eine permanentmagneterregte Synchronmaschine,
- Figur 11: die beispielhafte Verschaltung der Wicklungsstränge von Figuren 6, 9 und 10 in Stern-Schaltung, und
- Figur 12: die beispielhafte Verschaltung der Wicklungsstränge von Figuren 6, 9 und 10 in Dreiecksschaltung.

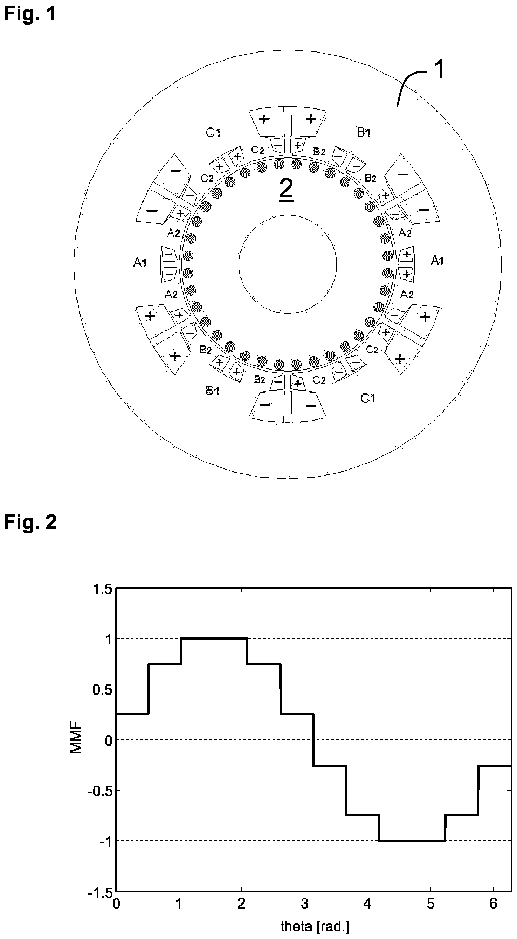

Figur 1 zeigt ein erstes Ausführungsbeispiel einer elektrischen Maschine nach dem vorgeschlagenen Prinzip mit einem Stator 1 und einem innenliegenden Rotor 2.

Der Rotor 2 ist als Käfigläufer der vorliegenden Asynchronmaschine ausgeführt.

Der Stator 1 umfasst zwei dreiphasige konzentrierte Wicklungen. Die erste Wicklung umfasst die drei Stränge A1, B1, C1. Die zweite Wicklung umfasst die drei Stränge A2, B2, C2. Jeder dieser Stränge ist jeweils einer elektrischen Phase eines elektrischen Dreiphasensystems zugeordnet.

Beide Wicklungen sind im Stator in jeweiligen Nuten eingebracht. Dabei ist die zweite Wicklung näher an einem zwischen Stator 1 und Rotor 2 gebildeten Luftspalt der Maschine angeordnet, während die erste Wicklung in Radialrichtung weiter außen im Stator, das heißt weiter entfernt von der Rotationsachse, angeordnet ist. Die erste Wicklung umfasst sechs Spulen, von denen jeweils zwei Spulen von der gleichen Phase einander gegenüberliegend angeordnet sind. Die zweite Wicklung umfasst zwölf Spulen, wobei jeweils zwei Spulen der gleichen elektrischen Phase um unmittelbar benachbarte Zähne gewickelt sind. Dabei ist keine mechanische Verschiebung zwischen erster und zweiter Wicklung vorgesehen, sodass jeweils die Spulen gleicher Phase der ersten und zweiten Wicklung in Radialrichtung übereinander angeordnet sind. Dabei sind jeweils zwei Spulen der zweiten Wicklung in Radialrichtung unterhalb einer Spule der ersten Wicklung ausgebildet.

Die genaue Anordnung der Nuten und der Spulen der Wicklungssysteme ergibt sich aus der Zeichnung gemäß Figur 1.

Die Windungszahl Nw1 der Spulen der ersten Wicklung ist verschieden von der Windungszahl Nw2 der Spulen der zweiten Wicklung.

Da es sich um konzentrierte Wicklungen handelt, genauer um eine zahnkonzentrierte Wicklung, sind die Spulen der beiden Wicklungssysteme jeweils um genau einen Zahn gewickelt.

Wie man anhand der Figur 1 erkennt, sind die in axialer Richtung verlaufenden Nuten sowohl der ersten als auch der zweiten Wicklung symmetrisch und äquidistant entlang des Umfangs des Stators verteilt.

Bezogen auf die Rotationsachse der Maschine sind alle Nuten der ersten Wicklung in einem ersten Radius angeordnet, während alle Nuten der zweiten Wicklung mit einem kleineren, zweiten Radius angeordnet sind.

Die Windungszahl Nw1 der Spulen der ersten Wicklung beträgt vorliegend 9 x n, während die Windungszahl der Spulen der zweiten Wicklung 4 x n beträgt. Dabei ist n eine natürliche Zahl.

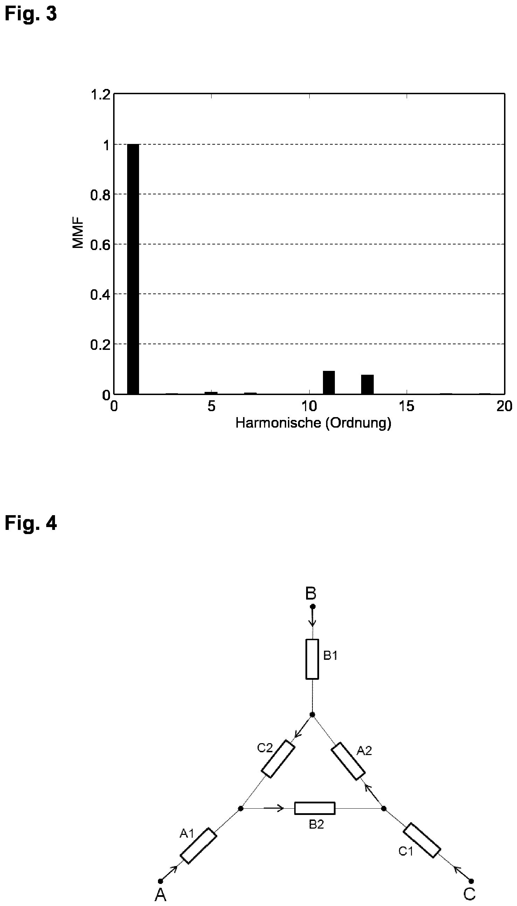

Wie später anhand von Figur 4 näher erläutert, sind die Stränge der dreiphasigen ersten Wicklung und der dreiphasigen zweiten Wicklung miteinander in einer Stern-Dreieck-Schaltung verschaltet.

Wie nachfolgend anhand der Figuren 2 und 3 deutlich wird, wird bei der vorgeschlagenen Maschine die erste Harmonische der Fourier-Zerlegung der magnetomotorischen Kraft als Grundwelle genutzt. Höhere Harmonische treten praktisch nicht auf, was der Maschine zu einem hohen Wirkungsgrad sowie einem gleichmäßigen Drehmomentverlauf verhilft. Das Spektrum der magnetomotorischen Kraft ist nahezu identisch mit demjenigen einer Maschine mit verteilter Wicklung mit q = 2, wobei q die Anzahl der Spulen pro Phase pro Pol ist. Der Wicklungsfaktor der Maschine gemäß Ausführung von Figur 1 beträgt ungefähr 35,3 %.

Damit ist die vorgeschlagene Maschine insbesondere für Hochspannungs-Anwendungen und elektrische Maschinen mit geringer Polzahl besonders gut geeignet. Dabei hat die vorgeschlagene Maschine aufgrund ihres Aufbaus mit konzentrierter Wicklung deutliche Vorteile bei der Herstellung, insbesondere bei den Herstellungskosten gegenüber einer Maschine mit verteilter Wicklung.

Figur 4 zeigt die Stern-Dreieck-Verschaltung der jeweils drei Stränge A1, B1, C1 der ersten Wicklung und der drei Stränge A2, B2, C2 der zweiten Wicklung. Wie man sieht, sind die drei Stränge der zweiten Wicklung A2, B2, C2 im Dreieck verschaltet. Die Ecken des Dreiecks sind über die jeweils komplementären Stränge A1, B1, C1 der ersten Wicklung an die drei netzseitigen Phasen A, B, C angeschlossen. Komplementär bedeutet in diesem Zusammenhang, dass an einem Schaltungsknoten jede elektrische Phase einmal angeschlossen ist. So ist beispielsweise an den Knoten des ersten und zweiten Strangs der zweiten Wicklung A2, B2 der dritte Strang der ersten Wicklung C1 angeschlossen.

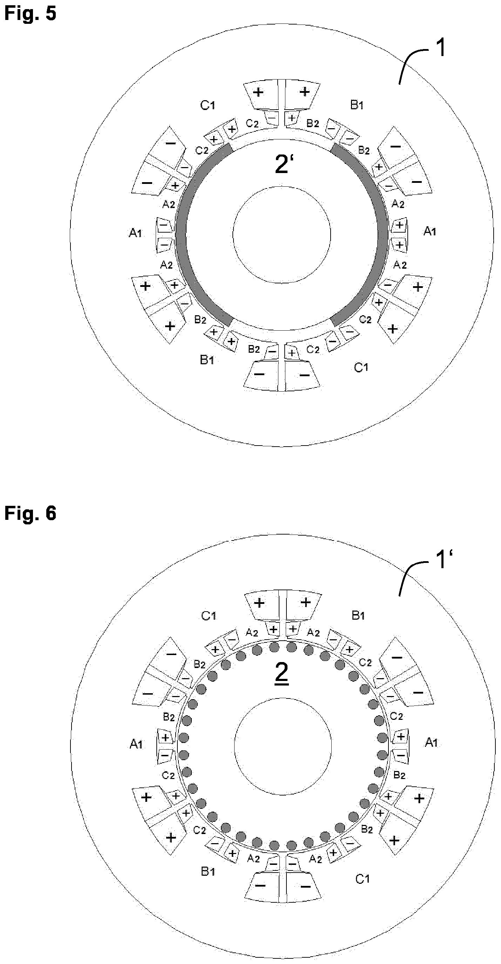

Figur 5 zeigt abweichend von Figur 1 eine elektrische Maschine mit einem Stator 1, bei der jedoch der Rotor 2' nicht wie in Figur 1 als Käfigläufer ausgeführt ist, sondern als Rotor mit zwei gegenüberliegenden Permanentmagneten. Die Maschine von Figur 5 ist als Synchronmaschine ausgelegt. Der Stator 1 einschließlich der Wicklungen A1, B1, C1, A2, B2, C2 entspricht in Aufbau und vorteilhafter Funktionsweise dem von Figur 1 und wird daher an dieser Stelle nicht noch einmal beschrieben.

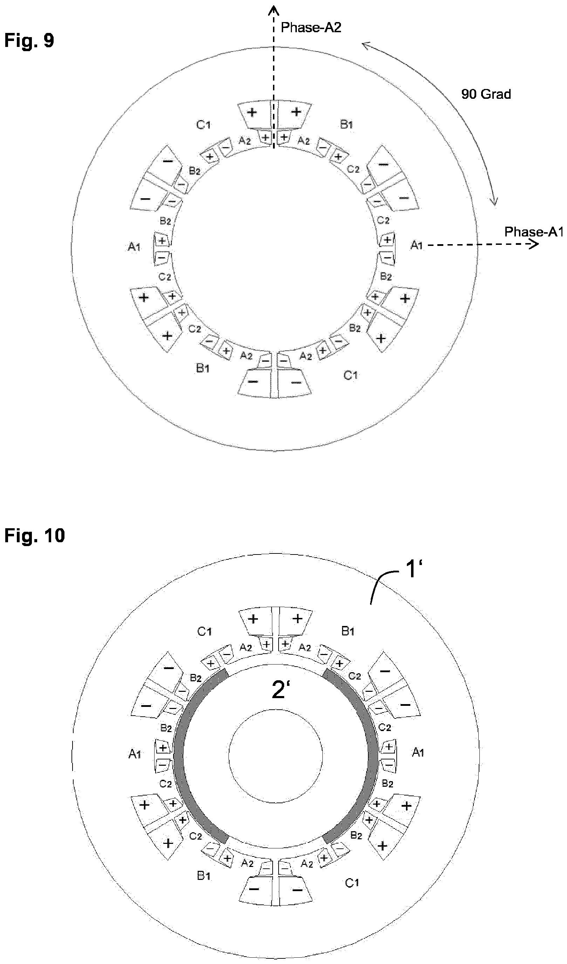

Figur 6 zeigt ausgehend von Figur 1 eine elektrische Maschine mit dem gleichen Rotor 2, jedoch einer anderen Ausführung des Stators 1'. Während bei dem Stator der Maschine von Figur 6 die erste Wicklung A1, B1, C1 identisch wie in Figur 1 ausgeführt ist, ist die zweite Wicklung A2, B2, C2 zwar mit der gleichen Topologie wie in Figur 1 ausgebildet, jedoch zur ersten Wicklung um 90° im mathematisch positiven Sinn um die Rotationsachse gedreht angeordnet. Diese Verschiebung ist anhand von Figur 9 erläutert.

Im Übrigen stimmt die Maschine von Figur 6 mit derjenigen von Figur 1 überein und wird insoweit nicht noch einmal beschrieben.

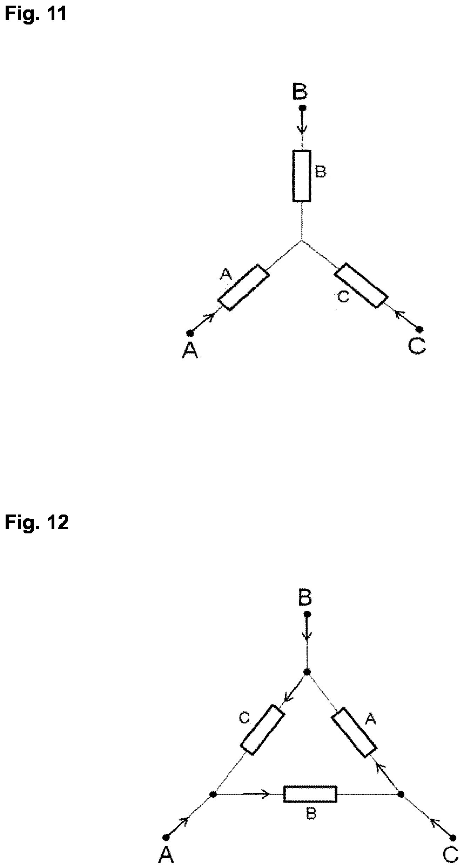

Im Unterschied zu der Maschine von Figur 1 kann aufgrund der Verdrehung des zweiten Wicklungssystems relativ zum ersten eine andere Speisung auf elektrischer Seite bei der Maschine vorgenommen werden. Es ist hierfür nunmehr keine Stern-Dreiecks-Schaltung vorgesehen, sondern eine reine Stern-Schaltung, wie in Figur 11 gezeigt, oder eine reine Dreiecks-Schaltung, wie in Figur 12 gezeigt.

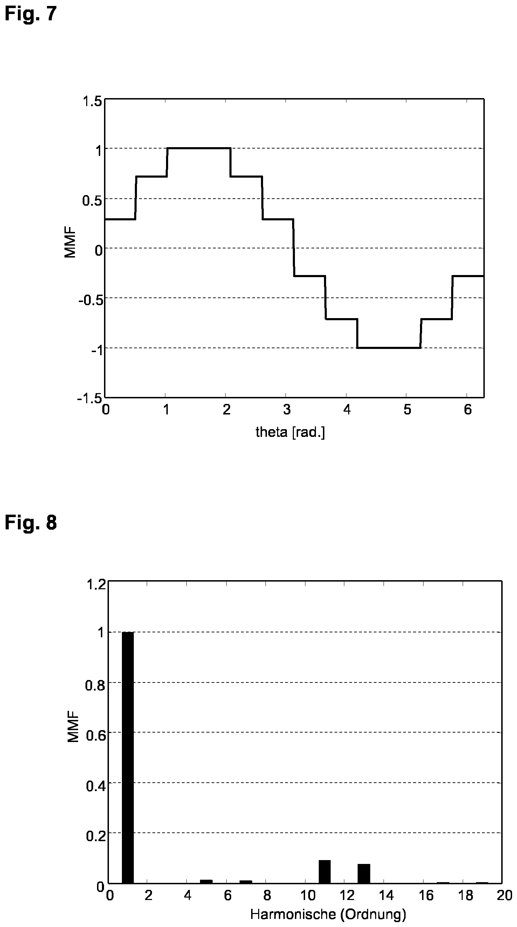

Die vorteilhafte Wirkungsweise der Ausführung von Figur 6 zeigt sich wiederum anhand der Verteilung der magnetomotorischen Kraft gemäß Figur 7 über den Winkel aufgetragen beziehungsweise anhand der Zerlegung in Harmonische gemäß Figur 8. Letztere zeigt, wie auch Figur 3 deutlich, dass neben der Grundwelle, die als Arbeitswelle genutzt wird, praktisch keine nennenswerten höheren Harmonischen in der Fourier-Zerlegung der magnetomotorischen Kraft vorkommen.

Figur 10 zeigt wiederum die Abwandlung der Asynchronmaschine mit Käfigläufer 2 ausgehend von Figur 6, welche in Figur 10 mit einem Permanentmagnetrotor 2' und als Synchronmaschine ausgelegt ist.

Das Verhältnis der Windungszahlen der ersten Wicklung zur zweiten Wicklung beträgt bei den Figuren 6, 9 und 10 nicht 9/4, wie in Figur 1, sondern 4/1. Dadurch ergibt sich bei diesen Ausführungen ein Wicklungsfaktor von zirka 31,1 %. Der Wicklungsfaktor ist damit geringer als bei der Wicklung gemäß Figur 1, die für eine Stern-Dreiecks-Schaltung ausgelegt ist.

### Bezugszeichenliste

- 1: Stator
- 1': Stator
- 2: Rotor
- 2': Rotor
- A1, B1, C1: erste Wicklung
- A2, B2, C2: zweite Wicklung
- A, B, C: elektrisches Dreiphasensystem
- MMK: Magnetomotorische Kraft
- Nw1: Windungszahl pro Spule
- Nw2: Windungszahl pro Spule

## Patentansprüche

1. Elektrische Maschine, umfassend einen Stator (1) und einen relativ zum Stator (1) beweglichen Rotor (2), **dadurch gekennzeichnet, dass**
- der Stator (1) eine erste Wicklung (A1, B1, C1) und zumindest eine zweite Wicklung (A2, B2, C2) umfasst, die jeweils als mehrsträngige, zahnkonzentrierte Wicklungen ausgeführt und in jeweilige Nuten des Stators (1) eingebracht sind,
- die erste Wicklung (A1, B1, C1) sechs Spulen umfasst, die in sechs Nuten eingebracht sind,
- die zweite Wicklung (A2, B2, C2) zwölf Spulen umfasst, die in zwölf Nuten eingebracht sind.

2. Elektrische Maschine nach Anspruch 1,
bei der die Windungszahl (Nw1) der Spulen der ersten Wicklung verschieden von der Windungszahl (Nw2) der Spulen der zweiten Wicklung ist.

3. Elektrische Maschine nach Anspruch 1 oder 2,
bei der die Spulen der ersten und zweiten Wicklung jeweils um genau einen, zwischen zwei benachbarten Nuten gebildeten Zahn gewickelt sind.

4. Elektrische Maschine nach eine der Ansprüche 1 bis 3,
bei der zwischen Stator (1) und Rotor (2) ein Luftspalt vorgesehen ist und die zweite Wicklung (A2, B2, C2) näher am Luftspalt angeordnet ist als die erste Wicklung (A1, B1, C1).

5. Elektrische Maschine nach einem der Ansprüche 1 bis 4,
bei der die Nuten der ersten und zweiten Wicklung jeweils gleichmäßig entlang des Umfangs des Stators verteilt sind.

6. Elektrische Maschine nach einem der Ansprüche 1 bis 5,
bei der das Verhältnis der Windungszahl (Nw1) der Spulen der ersten Wicklung zur Windungszahl (Nw2) der Spulen der zweiten Wicklung in einem Intervall zwischen 1,5 und 5 liegt, wobei die Intervallgrenzen eingeschlossen sind.

7. Elektrische Maschine nach einem der Ansprüche 1 bis 5,
bei der die Windungszahl (Nw1) der Spulen der ersten Wicklung 9 mal n beträgt und bei der die Windungszahl (Nw2) der Spulen der zweiten Wicklung 4 mal n beträgt, wobei n eine natürliche Zahl ist.

8. Elektrische Maschine nach einem der Ansprüche 1 bis 7,
bei der die erste und die zweite Wicklung (A1, B1, C1; A2, B2, C2) jeweils eine Dreiphasenwicklung ist.

9. Elektrische Maschine nach einem der Ansprüche 1 bis 8, wobei die erste und die zweite Wicklung (A1, B1, C1; A2, B2, C2) in einer Stern-Dreieck-Schaltung miteinander verschaltet sind.

10. Elektrische Maschine nach einem der Ansprüche 1 bis 8, wobei die erste und die zweite Wicklung (A1, B1, C1; A2, B2, C2) zueinander in einem Winkel von 90 Grad verschoben sind.

11. Elektrische Maschine nach einem der Ansprüche 1 bis 10, bei der die elektrische Maschine einen der folgenden Typen umfasst: Linearmaschine, Axialflussmaschine, Radialflussmaschine, Asynchronmaschine, Synchronmaschine.

12. Elektrische Maschine nach einem der Ansprüche 1 bis 11, die als Maschine mit Innenläufer oder als Maschine mit Außenläufer aufgebaut ist.

13. Elektrische Maschine nach einem der Ansprüche 1 bis 12, bei der der Rotor von einem der folgenden Typen ist:
Käfigläufer, Mehrschichtrotor im Falle der Asynchronmaschine oder im Falle der Synchronmaschine Permanentmagnetrotor, Rotor mit vergrabenen Magneten oder ein elektrisch gespeister Rotor, insbesondere Vollpolrotor, Schenkelpolrotor, Heteropolar-Rotor, Homopolar-Rotor oder Synchron-Reluktanzrotor.

## Claims

1. An electric machine comprising a stator (1) and a rotor (2) which is movable relative to the stator (1), **characterized in that**
- the stator (1) comprises a first winding (A1, B1, C1) and at least one second winding (A2, B2, C2) which are each designed as a multi-strand, tooth-concentrated winding and are inserted in respective slots of the stator (1),
- the first winding (A1, B1, C1) comprises six coils, which are inserted in six slots,
- the second winding (A2, B2, C2) comprises twelve coils which are inserted in twelve slots.

2. The electric machine according to claim 1,
in which the number of turns (Nw1) of the coils of the first winding is different from the number of turns (Nw2) of the coils of the second winding.

3. The electric machine according to claim 1 or 2,
in which the coils of the first and second windings are each wound around exactly one tooth formed between two adjacent slots.

4. The electric machine according to any of claims 1 to 3,
in which an air gap is provided between the stator (1) and the rotor (2), the second winding (A2, B2, C2) being arranged closer to the air gap than the first winding (A1, B1, C1).

5. The electric machine according to any of claims 1 to 4,
in which the slots of the first and second windings are distributed equally along the circumference of the stator.

6. The electric machine according to any of claims 1 to 5,
in which the ratio of the number of turns (Nw1) of the coils of the first winding to the number of turns (Nw2) of the coils of the second winding is in an interval between 1.5 and 5, with the interval limits being included.

7. The electric machine according to any of claims 1 to 5,
in which the number of turns (Nw1) of the coils of the first winding is 9 times n and in which the number of turns (Nw2) of the coils of the second winding is 4 times n, with n being a natural number.

8. The electric machine according to any of claims 1 to 7,
in which the first and second windings (A1, B1, C1; A2, B2, C2) each represent a three-phase winding.

9. The electric machine according to any of claims 1 to 8,
in which the first and second windings (A1, B1, C1; A2, B2, C2) are interconnected in a star-delta connection.

10. The electric machine according to any of claims 1 to 8,
wherein the first and second windings (A1, B1, C1; A2, B2, C2) are shifted at an angle of 90 degrees relative to each other.

11. The electric machine according to any of claims 1 to 10,
in which the electric machine comprises one of the following types: linear machine, axial flow machine, radial flow machine, asynchronous machine, synchronous machine.

12. The electric machine according to any of claims 1 to 11,
which is constructed as a machine with an internal rotor or as a machine with an external rotor.

13. The electric machine according to any of claims 1 to 12,
in which the rotor is of one of the following types: cage rotor, multilayer rotor in the case of an asynchronous machine or permanent magnet rotor in the case of a synchronous machine, rotor with buried magnets or an electrically supplied rotor, in particular non-salient pole rotor, salient pole rotor, heteropolar rotor, homopolar rotor or synchronous reluctance rotor.

## Revendications

1. Machine électrique, comprenant un stator (1) et un rotor (2) mobile par rapport au stator (1), **caractérisée en ce que**
- le stator (1) comprend un premier enroulement (A1, B1, C1) et au moins un deuxième enroulement (A2, B2, C2) qui sont exécutés respectivement comme enroulements multibrin à concentration de dents et qui sont logés dans des rainures respectives du stator (1),
- le premier enroulement (A1, B1, C1) comprend six bobines qui sont logées dans six rainures,
- le deuxième enroulement (A2, B2, C2) comprend douze bobines qui sont logées dans douze rainures.

2. Machine électrique selon la revendication 1,
dans laquelle le nombre de spires (Nw1) des bobines du premier enroulement est différent du nombre de spires (Nw2) des bobines du deuxième enroulement.

3. Machine électrique selon la revendication 1 ou 2,
dans laquelle les bobines du premier et du deuxième enroulement sont enroulées respectivement autour d'exactement une dent formée entre deux rainures adjacentes.

4. Machine électrique selon l'une des revendications 1 à 3,
dans laquelle une lame d'air est prévue entre stator (1) et rotor (2) et le deuxième enroulement (A2, B2, C2) est disposé plus près de la lame d'air que le premier enroulement (A1, B1, C1).

5. Machine électrique selon l'une des revendications 1 à 4,
dans laquelle les rainures du premier et du deuxième enroulement sont réparties respectivement de manière régulière le long de la circonférence du stator.

6. Machine électrique selon l'une des revendications 1 à 5,
dans laquelle le rapport du nombre de spires (Nw1) des bobines du premier enroulement au nombre de spires (Nw2) des bobines du deuxième enroulement se situe dans un intervalle entre 1,5 et 5, sachant que les limites d'intervalle sont incluses.

7. Machine électrique selon l'une des revendications 1 à 5,
dans laquelle le nombre de spires (Nw1) des bobines du premier enroulement est de 9 fois n et dans laquelle le nombre de spires (Nw2) des bobines du deuxième enroulement est de 4 fois n, sachant que n est un nombre naturel.

8. Machine électrique selon l'une des revendications 1 à 7,
dans laquelle le premier et le deuxième enroulement (A1, B1, C1 ; A2, B2, C2) sont respectivement un enroulement triphasé.

9. Machine électrique selon l'une des revendications 1 à 8,
dans laquelle le premier et le deuxième enroulement (A1, B1, C1 ; A2, B2, C2) sont respectivement connectés l'un à l'autre en un circuit en étoile-triangle.

10. Machine électrique selon l'une des revendications 1 à 8,
sachant que le premier et le deuxième enroulement (A1, B1, C1 ; A2, B2, C2) sont décalés d'un angle de 90 degrés l'un par rapport à l'autre.

11. Machine électrique selon l'une des revendications 1 à 10,
dans laquelle la machine électrique comprend l'un des types suivants : machine linéaire, machine à flux axial, machine à flux radial, machine asynchrone, machine synchrone.

12. Machine électrique selon l'une des revendications 1 à 11, qui est constituée comme machine à induit intérieur ou comme machine à induit extérieur.

13. Machine électrique selon l'une des revendications 1 à 12,
dans laquelle le rotor est de l'un des types suivants :
rotor à cage, rotor multicouche dans le cas de la machine asynchrone ou dans le cas de la machine synchrone rotor à aimants permanents, rotor à aimants noyés ou un rotor à alimentation électrique, en particulier rotor à pôles pleins, rotor à pôles saillants, rotor hétéropolaire, rotor homopolaire ou rotor à réluctance synchrone.
